(19) Europäisches Patentamt

European Patent Office

Office européen des brevets

(11) **EP 0 814 887 B1**

(12) **EUROPEAN PATENT SPECIFICATION**

(45) Date of publication and mention
of the grant of the patent:
**25.06.2003 Bulletin 2003/26**

(51) Int Cl.[7]: **B01D 35/143**, B01D 61/12,
B01D 61/32, B01D 61/22,
B01D 65/08

(21) Application number: **96905596.1**

(22) Date of filing: **15.03.1996**

(86) International application number:
**PCT/AU96/00144**

(87) International publication number:
**WO 96/028236 (19.09.1996 Gazette 1996/42)**

(54) **FILTRATION MONITORING AND CONTROL SYSTEM**

FILTRATIONSKONTROLL- UND REGULATIONSSYSTEM

DISPOSITIF DE CONTROLE ET DE REGULATION DE FILTRATION

(84) Designated Contracting States:
**AT BE CH DE DK ES FI FR GB GR IE IT LI LU MC NL PT SE**

(30) Priority: **15.03.1995 AU PN175095**
**15.06.1995 AU PN357195**
**06.11.1995 AU PN639795**
**22.12.1995 AU PN731695**

(43) Date of publication of application:
**07.01.1998 Bulletin 1998/02**

(60) Divisional application:
**02080409.2 / 1 300 186**

(73) Proprietor: **USF Filtration and Separations Group Inc.**
**Timonium, Maryland 21093 (US)**

(72) Inventors:
• **BECK, Thomas, William**
**South Windsor, NSW 2756 (AU)**
• **DRUMMOND, Humphry John Jardine,**
**London W14 NHR (GB)**
• **MAXWELL, Ian, Andrew**
**Leichhardt, NSW 2040 (AU)**
• **JOHNSON, Warren, Thomas**
**Bligh Park, NSW 2756 (AU)**
• **KENSETT-SMITH, Brett**
**Beecroft, NSW 2119 (AU)**

(74) Representative: **W.P. THOMPSON & CO.**
**55 Drury Lane**
**London WC2B 5SQ (GB)**

(56) References cited:
DE-A- 3 428 307          DE-A- 4 117 422
GB-A- 2 253 572          GB-A- 2 278 295
US-A- 4 482 461          US-A- 5 320 760

• **PATENT ABSTRACTS OF JAPAN vol. 6, no. 125, 10 July 1982 & JP 57 050642 A (KURIRA WATER IND), 25 March 1982**
• **DERWENT ABSTRACT, Accession No. 94-123420/15, Class D15, J01; & JP,A,06 071 120, (AKAI ELECTRIC KK), 15 March 1994.**

**Description**

The present invention relates to ultrafiltration and microfiltration systems and in particular to testing, monitoring and control systems for use with membrane filtering systems.

Although the invention is described with respect to its application to fibre membrane filtering systems, it will be appreciated that it is applicable to ultrafiltration/microfiltration systems in general and is not limited to the specific application described.

BACKGROUND ART

Fibre membrane filtration is a well developed method which involves the use of a large number of hollow tubular micro-porous fibres. Each fibre is adapted to allow filtrate to flow from the exterior of the fibre through micro-pores in the fibre wall to the interior of the fibre, while excluding impurities from the filtrate. The pores can be, for example, around 0.2 micrometres in diameter.

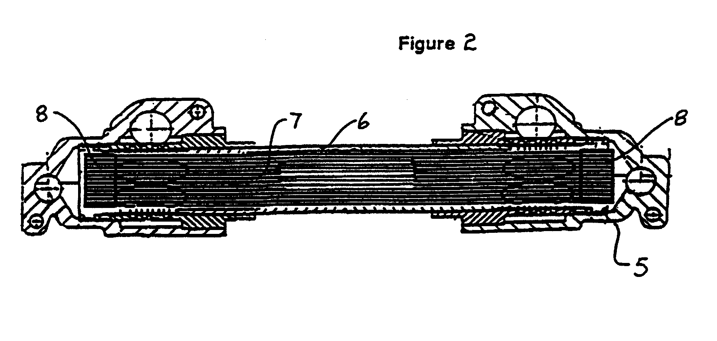

In practice, many thousands of fibres are bundled together and encased in a shell, the complete assembly being known as a module 5 (see Figure 2). The shell 6 is usually cylindrical and the fibres 7 extend longitudinally therethrough. The ends of the shell are sealed, usually with a resin or the like known as the potting forming a plug 8 at each end. The ends of the hollow fibres 7 extend through, and are encased in the potting plug 8 so that the interior of each of the fibres 7 is in communication with the exterior of the module 5 at both ends, thereby allowing filtrate to be removed from two end locations. Alternatively, both ends of each fibre may extend through the potting and communicate with the exterior at one end of the module 5, or the fibres at one end may extend through the potting, the other fibre ends being sealed.

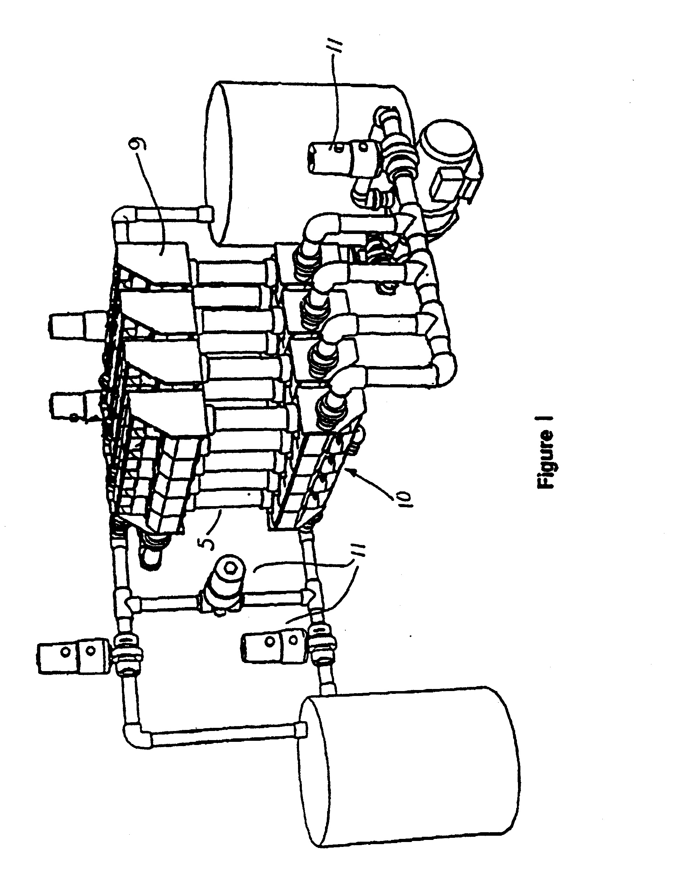

As shown in Figure 1, the modules 5 are usually (but not necessarily) disposed in "banks" 9, each comprising a row of modules 5 sharing a manifold 10, the banks being arranged in an array.

In use, feed or influent is introduced to the space intermediate the exterior of the fibres and the interior of a module shell. Filtrate flows through the micro-porous membrane of the fibres 7 into the interior of the fibres and thereafter flows along the length of the fibres passing through the plug 8 to the exterior of the module 5, usually into a manifold.

The operation of the filtering system is normally controlled by a number of valves 11 which control the flow of feed to the system, the flow of filtrate, backwashing of the filters using gas and/or filtrate, and introduction of wetting agents and special chemical cleaning agents during backwashing. These valves 11 are typically pneumatically operated by compressed air, with the flow of compressed air to each valve being controlled by an electrically operated solenoid.

Operation of the system may be monitored by detectors which measure fluid flow, fluid pressure, temperature and other parameters at various points throughout the system. Feedback loops may be built into the system to ensure the system is operating according to preset control conditions.

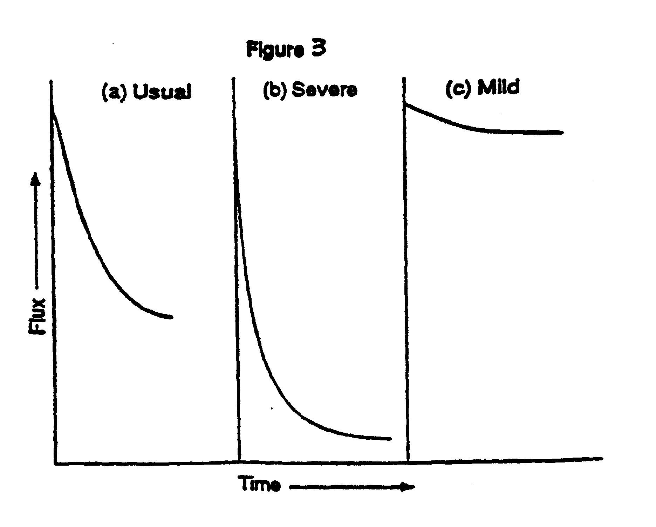

During use the fibres become clogged with the filtered impurities and require "backwashing" at regular intervals to remove the impurities and maintain the efficiency of the filtering. The frequency and type of backwashing will be dependent on the state and type of feedstream being filtered. Figure 3 illustrates flux decline with various types of feed. In many situations the state of the feedstream is dynamic and thus it is difficult to predict when and how often backwashing will be required. This can lead to the system being set to cope with a "worst case" situation, causing the system to be run inefficiently.

Furthermore, choosing the size, number and type of modules 5 required when designing a filtration plant for a particular purpose involves the consideration of a number of factors. For example, plant capacity, level of filtration required, backwashing requirements and type of feedstream to be filtered each need to be investigated. Whilst some of these factors are relatively easy to measure, quantifying the characteristics of the feedstream in particular has proved difficult. Plant designers have tended in this respect to make assumptions about feedstream quality based on previous experience with similar types of feedstreams. To ensure that a particular filtration result is achieved, the plant may be designed using "worst case" assumptions for the feedstream. The designer must then balance these feedstream assumptions against size and cost constraints, as well as the other factors discussed above.

The problem of feedstream assessment is exacerbated when an unusual or unique feedstream is involved. In such cases, extensive and costly testing with scale models may be required to assess the effects of the particular feedstream on the desired type of filter unit. This adds significantly to the costs of designing and building filtration plants, particularly where many different filter units need to be tested.

In US-A-2278295 a method of improving the filtering of fluids in which the pressure differential of the fluid across the filter system is measured is described. The rate of change of this pressure is measured continuously and consequential changes to the duration of filtration are continuously made.

GB-A-225372 describes a system in which the flow resistance of a filter is measured and the pressure applied to the filter is adjusted accordingly.

JP-A-57050642 describes a system in which the affect of clogging particles etc on a filter are measured.

It is an object of the present invention to overcome or at least substantially ameliorate one or more of these disadvantages of the prior art.

A further object of the invention, at least in one of its aspects, is to provide a control and monitoring system which can ascertain the state of the feedstream in real time and control the filtering system dynamically in response to the state of the feedstream.

DISCLOSURE OF INVENTION

According to a first aspect, the present invention provides a method of determining the fouling effect of a feedstream on a filter in an ultrafiltration or microfiltration system, the filter having known operating characteristics, said method comprising the steps of:

i) passing the feedstream through a filter having known operating characteristics;
ii) determining the change in resistance to flow of the feedstream across the filter, either continuously or over a number of time intervals; and
iii) from this data, calculating a feed fouling index (FFI) representative of the fouling characteristics of the feedstream with respect to the filter ; and wherein

the FFI is calculated by plotting the change in resistance across the filter as a function of volume filtered and measuring the gradient of a curve so plotted at a point or interval where the curve approaches a straight line.

In a preferred embodiment the change in resistance may be measured by taking readings of the cumulative volume of feedstream passing through the filter over time. Alternatively, pressure sensing devices may be positioned on either side of the filter to relate resistance changes in terms of trans-membrane pressure (TMP) drop.

In a second aspect the present invention provides an on-line method of monitoring and controlling a filtering system, said method comprising the steps of:

i) determining the resistance of filtering elements used in the filtering system by monitoring a number of operating parameters of the system;
ii) calculating a feed fouling index representative of the fouling nature of the feedstream to the filtering system using the resistance value determined in i); and
iii) controlling the operation of the filtering system in dependence on the value of the feed fouling index calculated,

wherein the FFI is calculated by plotting the change in resistance across the filter (5) as a function of volume filtered and measuring the gradient of a curve so plotted at a point or interval where the curve approaches a straight line.

It will be appreciated that the filtering system may be controlled in a variety of ways employing the feed fouling index as the controlling factor. For example, the backwashing cycle may be optimised for a particular quality of feedstream and varied dynamically in accordance with the quality of feedstream on a continuous basis. Similarly, the system may provide a self set up procedure on the basis of an initial feedstream quality which optimises the performance of the filtering system upon initial installation.

In particular, the invention has been found useful in measuring the fouling character of a backwash lagoon. The filtration process separates the incoming feed into a filtrate and backwash stream. The backwash stream is typically 10% of the incoming feedstream flow. In some applications it is important to try and recover as much liquid as possible from the backwash stream, for example, filtration systems in arid areas. In these cases the backwash is normally settled in a lagoon. The supernatant from the lagoon is then returned to the front of the filtration plant and shandied or mixed with the incoming feedstream. By turning on and off the supernatant flow, the fouling character of the lagoon can be monitored by noting the changes in the feed fouling index. If the fouling nature of the supernatant begins to rise unduly, as shown by rising feed fouling index, the system can be arranged to take action to correct this problem either automatically or through requesting operator intervention.

In a particular embodiment, the present invention provides an off-line method of determining the potential fouling effect of a feedstream, said method including the steps of:

i) passing a sample of the feedstream at a predetermined pressure through a filter having known operating characteristics; and the calculated feed fouling index (FFI) being representative of the fouling characteristics of the feedstream sample on the known filter.

Preferably, the method further includes the step of correlating the FFI with a second FFI calculated for a membrane filter for use in a filtration unit.

Desirably, the FFI is calculated by plotting the change in resistance across the filter as a function of volume filtered and measuring the gradient of a curve so plotted at a point or interval where the curve approaches a straight line.

It is desirable that the change in resistance of the filter is measured by recording at a number of predetermined points in time the cumulative volume of feedstream having passed through the filter.

In other embodiments, pressure sensing devices may be used to measure or estimate changes in resistance of the filter over time.

It is desirable that the FFI is calculated by a computer in response to entry of the resistance or pressure data. In a particularly preferred embodiment, the computer extrapolates from the entered data to provide a more accurate FFI.

In another aspect, the present invention provides an apparatus for use in determining the potential fouling effect of a feedstream by the method of the first aspect above, said apparatus including:

a filter having known properties;
means to pass a sample of the feedstream through said filter at a predetermined pressure;
means for measuring the change in resistance to flow of the feedstream through the filter over time; and
calculating quantitatively a feed fouling index (FFI) indicative of the fouling nature of the feedstream on the filter based on the measured change in resistance to flow so as to estimate the potential fouling effect of the feedstream on other known filters.

Preferably, the means to pass the feedstream sample through the filter includes a container for holding the sample, and means for pressurising means for pressurising the sample within the container for delivery of the sample to the filter at a preselected pressure.

Preferably, the pressurising means is a manually operated pump. Most preferably, the container and pressurising means are provided in the form of a modified manually operated garden-spraying apparatus.

Desirably, the filter element is of the cellulose acetate type. It is particularly desirable that 0.2 micrometre cellulose acetate filter paper is used.

In one embodiment, the regulating means takes the form of an adjustable valve incorporating a pressure gauge. It is desirable that a second pressure gauge is located in-line between the container and the regulator.

Preferably, one or more manually operable valves are provided to allow for priming and cleaning of the apparatus.

BRIEF DESCRIPTION OF DRAWINGS

Preferred embodiments of the invention will now be described, by way of example only, with reference to the accompanying figures in which:

Figure 1 shows a typical cross-flow microfiltration system;
Figure 2 shows a detailed cross-sectional view of a fibre module used in Figure 1;
Figure 3 shows different types of flux decline over time;
Figure 4 shows a graph of the resistance characteristic of a membrane;

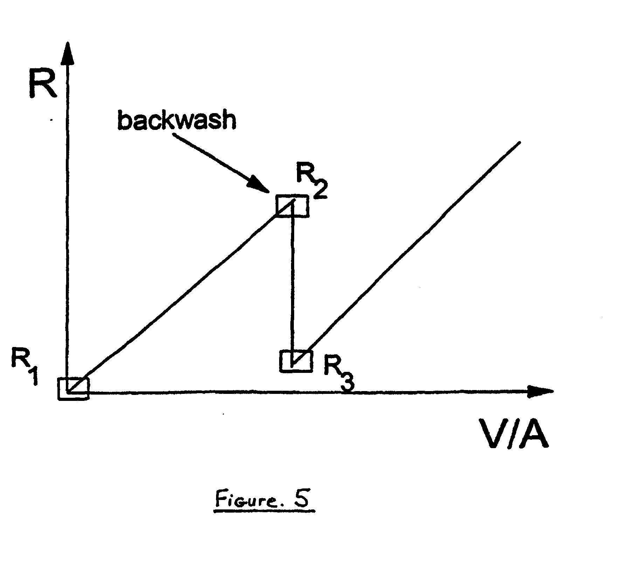

Figure 5 shows a graph of resistance versus volume of filtrate following backwashing;
Figure 6 is a schematic diagram of an apparatus according to the first aspect of the invention;

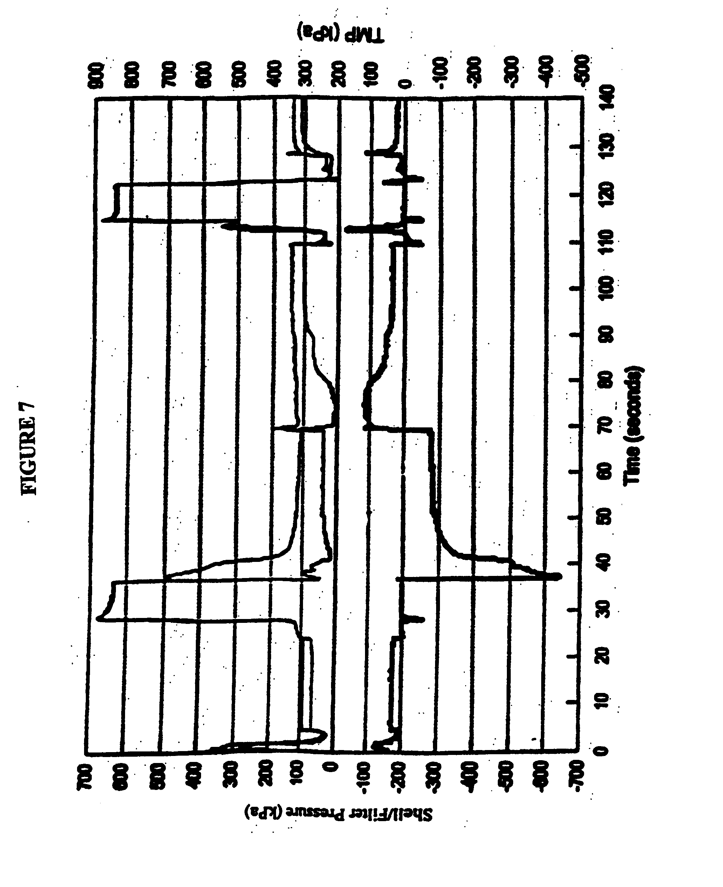

Figure 7 shows a snapshot profile obtained from a filtration machine with excessive rewet pressure spikes; and

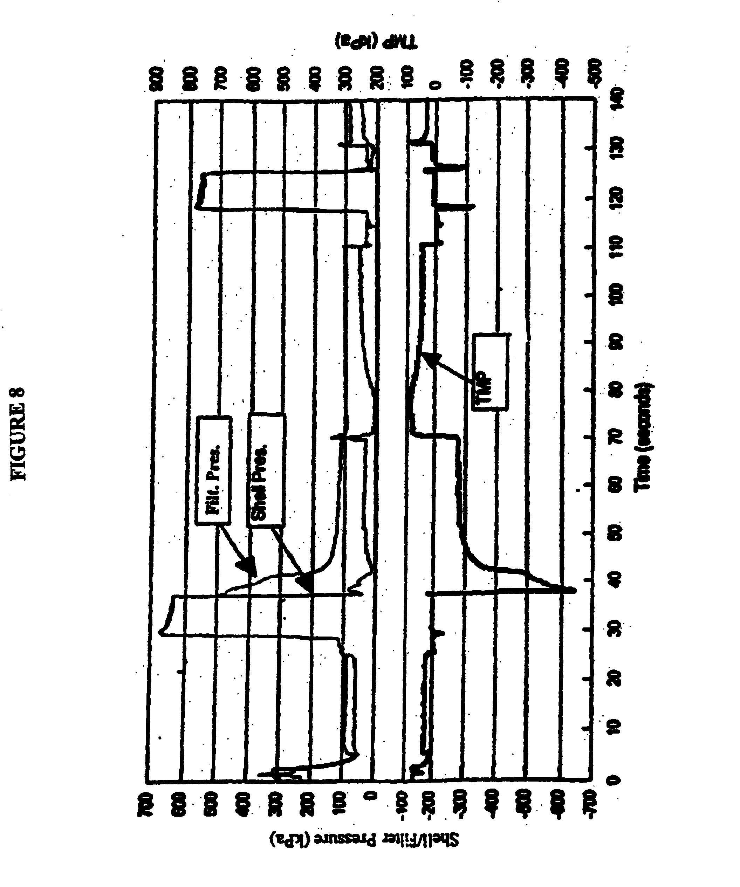

Figure 8 shows a snapshot of the same machine as Figure 7 with the fault corrected.

MODES FOR CARRYING OUT INVENTION

In one preferred form of the invention, the monitoring and control system comprises a dedicated computer processing system interfaced to a number of sensing and monitoring devices arranged to monitor selected operating parameters of the system. Under the control of system programs the processor responds to the entered parameters to control the operation of the filtering system. Apart from control of the system operation, the control and monitoring system may be programmed to perform regular testing of system performance, data logging and system telemetry.

As stated above, a good indication of the state of the feedstream has been found to be the feed fouling index (FFI). This index is a function of how fouling the feedstream is and will vary with the quality of the feedstream. The FFI for a particular system can be calculated as follows.

The resistance of a particular membrane is determined by:

$$R = \frac{\Delta P \times A}{\eta \times Q}$$

where

$R$ = resistance to flow (m$^{-1}$), typically 10$^{12}$;
$\eta$ = viscosity of the feedstream (Pa• S), assumed to be water;
$\Delta P$ = pressure across the membrane (Pa), often referred to as TMP;
$Q$ = flow through membrane (m$^3$sec$^{-1}$); and
$A$ = membrane area (m$^2$).

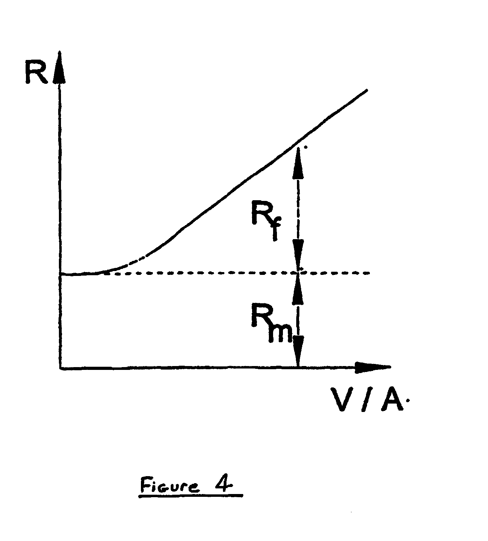

When liquid passes through the membrane it becomes fouled and the resistance rises. In many cases this rise is proportional to the quantity of liquid which has passed through the membrane. A graph of the resistance characteristic is shown in Figure 4.

$$R = R_m + R_f$$

$$= R_m + FFI \times \frac{V}{A}$$

where:

$R_f$ = resistance to flow due to fouling layer;
$R_m$ = resistance to flow when V = 0;
$FFI$ = Feed Fouling Index, typically 0-500 x 10$^{12}$m$^{-2}$; and
$V$ = Volume of filtrate passed through the membrane.

The performance of a given fibre compared to a standard fibre is given by the MMP, where MMP for the standard fibre is defined to be 1. So for a membrane X,

$$MMP_x = \frac{FFI_x}{FFI_{MSF}}$$

where:

$MMP_x$ =     membrane porosity for fibre x;
$FFI_x$ =     feedstream fouling index for fibre x; and
$FFI_{MSF}$ =     feed fouling index for standard fibre on the same feedstream as used for $FFI_x$.

The feed fouling index (FFI) can be used to measure the efficiency of the upstream process from the continuous microfiltration plants. For instance, if a bioreactor is used to produce secondary sewage, or treated paper waste, or if a clarifier is used to treat potable water, the FFI will give an estimate of the suspended solids level and the nature of the solids (particle size, compressibility etc). By varying the operating parameters of this upstream process and monitoring the FFI it can be optimised for the continuous microfiltration process, allowing more economical performance.

The compressibility of a dirt layer is a measure of the increase in resistance of a given dirt layer as the TMP increases. This can be seen as an apparent increase in FFI. Some feedstreams are relatively incompressible, or may become appreciably compressible over a threshold TMP value. River waters fall into this class. However, as the "organic" solids level increases the compressibility increases. Sewage is compressible according to its quality. If the suspended solids level is high, and particularly if algae are present, the compressibility is high. Paper waste is extremely compressible.

It has been found that good quality secondary sewage (suspended solids and soluble BOD less than approximately 5) has considerably less compressibility than ordinary or poor quality secondary sewage. The FFI is also lower, allowing both higher fluxes and higher TMP's to be used. The latter extends the time between chemical cleans, reducing the operating costs of the system.

The recirculation pressure drop is a measure of the blocking of modules. It has been found that in floccing of sewage to remove phosphate, the TMP may recover with each backwash. The maximum TMP reached might remain low, but the recirculation pressure builds up rapidly. This has been correlated with a build up in solids in the module. These factors may be used to trigger the chemical clean, rather than the maximum TMP as usually happens.

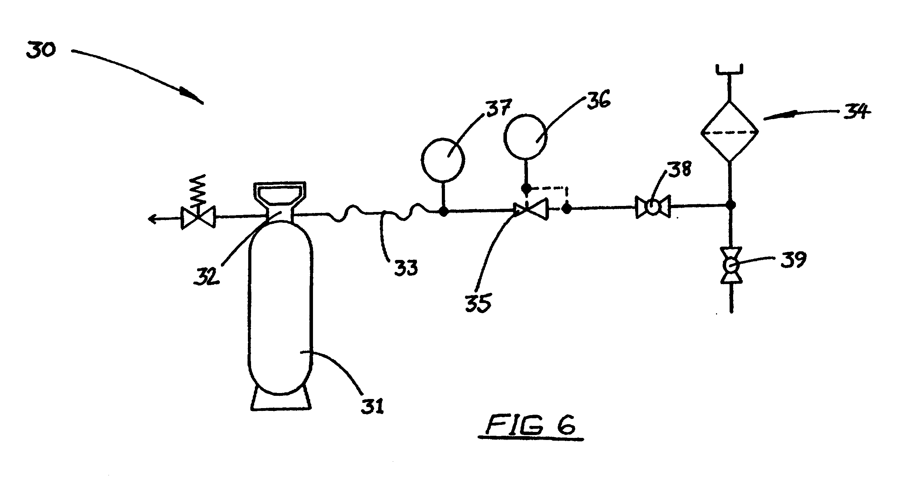

In a second preferred embodiment, shown in Figure 6, the invention consists of an apparatus 30 for use in determining the potential fouling effect of a feedstream using a method described above.

The apparatus 30 includes a sample container 31 and a manually operable pressurising pump 32. A pressure hose 33 extends from the interior of the container 31 to a filter housing 34, and includes in-line a first manually operable valve 35 incorporating a first pressure gauge 36. A second pressure gauge 37 is also provided in-line with the hose 33 intermediate the container 31 and the filter housing 34. In an alternative embodiment, the pressure hose 33 is omitted, and valve 35 directly connects the interior of the container 31 with the filter housing 34.

The filter housing 34 is adapted to hold a disposable filter element (not shown) having known operating characteristics. In a preferred embodiment, 0.2 μm cellulose acetate filter paper is used.

In use, a feedstream sample is placed in the container 31. The apparatus is primed and a clean filter element is installed into the filter housing 34. The manual pump is then operated to pressurise the container to about 120 kPa.

The first valve 35 is opened until the feedstream fluid is being supplied to the filter at a steady 50 kPa. The filtrate flowing from the outlet side of the filter housing 34 is captured in a measuring beaker (not shown). At the end of each minute, the cumulative volume of filtrate is recorded, until about 16 samples have been taken.

The flow may then be stopped and the apparatus flushed and cleaned in preparation for further testing.

The recorded time and cumulative volume data are entered into a proprietary software program which calculates the FFI of the feedstream according to the mathematical relationships discussed above. The FFI may be calculated more precisely by including software routines which extrapolate the time/volume curve. Other data manipulation techniques such as averaging or interpolation may be similarly employed.

Other valves 38 and 39 may be provided for the purposes of priming and cleaning the apparatus. There may also be provided valves, gauges or pressure or flow sensors for otherwise controlling or measuring the pressure and flow characteristics of the feedstream sample.

It should be noted that the FFI is a characteristic of the feedstream and the filter. By calibrating the properties of other types of filters with a range of FFIs, the potential fouling effect of a particular feedstream on a range of filter types may be quantitatively estimated with a single feedstream sample. Filtration systems may be designed and scaled to a particular performance level without the need for extensive and costly testing procedures.

The FFI may also be used to optimise, monitor and troubleshoot the operation of existing filtration systems. In its on-line form, the invention may perform continuous or regular checks of feedstream quality. This allows backwashing and maintenance cycles to be run with maximum efficiency.

The off-line form of the invention may be used to troubleshoot existing systems which do not include on-line testing. Alternatively, the off-line system, and particularly the apparatus described, may be used as an invaluable tool in assessing feedstream quality before the filtration system is designed. Quantitative assessment of feedstream quality allows system designers to more accurately predict the likely behaviour of a variety of filtration elements in response to a given feedstream. This is of particular importance where the feedstream to be filtered is of a unique or rare type.

It will be appreciated that the forms of the invention described are not limited to the specific embodiments described above and further exemplifications of the invention are possible without departing from the scope of the invention.

**Claims**

1. A method of determining the fouling effect of a feedstream on a filter (5) in an ultrafiltration or microfiltration system, the filter having known operating characteristics, said method comprising the steps of:

   (i) passing the feedstream through a filter (5) having known operating characteristics;
   (ii) determining the change in resistance to flow of the feedstream across the filter (5), either continuously or over a number of time intervals; and
   (iii) from this data, calculating a feed fouling index (FFI) representative of the fouling characteristics of the feedstream with respect to the filter (5),

   wherein the FFI is calculated by plotting the change in resistance across the filter (5) as a function of volume filtered and measuring the gradient of a curve so plotted at a point or interval where the curve approaches a straight line.

2. A method according to Claim 1, wherein the change in resistance is measured by taking readings of the cumulative volume of feedstream passing through the filter (5) over time.

3. A method according to Claim 1, wherein pressure sensing devices are positioned on either side of the filter (5) to relate resistance changes in terms of trans-membrane pressure (TMP) drop.

4. An on-line method of monitoring and controlling a filtering system (5), said method comprising the steps of:

   (i) determining the resistance of filtering elements used in the filtering system (5) by monitoring a number of operating parameters of the system;
   (ii) calculating a feed fouling index (FFI) representative of the fouling nature of the feedstream to the filtering system (5) using the resistance value determined in (i); and
   (iii) controlling the operation of the filtering system in dependence on the value of the feed fouling index (FFI) calculated,wherein the FFI is calculated by plotting the change in resistance across the filter (5) as a function of volume filtered and measuring the gradient of a curve so plotted at a point or interval where the curve approaches a straight line.

5. An off-line method of determining the potential fouling effect of a feedstream using the method of any one of Claims 1 to 3, said method including the step of:

   (i) passing a sample of the feedstream at a predetermined pressure through a filter (5) having known operating characteristics; and the calculated feed fouling index (FFI) being representative of the fouling characteristics of the feedstream sample on the known filter (5).

6. The method according to Claim 5, further including the step of correlating the FFI with a second FFI calculated for a membrane filter for use in a filtration unit.

7. The method according to Claim 5, wherein the FFI is calculated by plotting the change in resistance across the filter (5) as a function of volume filtered and measuring the gradient of a curve so plotted at a point or interval where the curve approaches a substantially straight line.

8. The method according to Claim 5, wherein the change in resistance of the filter(5) is measured by recording at a number of predetermined points in time the cumulative volume of feedstream having passed through the filter(5).

9. The method according to Claim 5, wherein pressure sensing devices are used to measure or estimate changes in resistance of the filter(5) over time.

10. The method according to Claim 5, wherein the FFI is calculated by a computer in response to entry of the resistance or pressure data.

**11.** The method according to Claim 10, wherein the computer extrapolates from the entered data to provide a more accurate calculation of FFI.

**12.** An apparatus for use in determining the potential fouling effect of a feedstream by the method according to any one of Claims 1 to 11, said apparatus including:

a filter (5) having known properties;
means to pass a sample of the feedstream through said filter (5) at a predetermined pressure;
means for measuring the change in resistance to flow of the feedstream through filter (5) over time; and
means for calculating quantitatively a feed fouling index (FFI) indicative of the fouling nature of the feedstream on the filter (5) based on the measured change in resistance to flow so as to estimate the potential fouling effect of the feedstream on other known filters.

**13.** Apparatus according to Claim 12, wherein the means to pass the feedstream sample through the filter (5) includes a container (31) for holding the sample, and means (32) for pressurising the sample within the container (31) for delivery of the sample to the filter (5) at a preselected pressure.

**14.** Apparatus according to Claim 13, wherein the pressurising means is a manually operated pump (32).

**15.** Apparatus according to Claim 13 or 14, wherein the container (31) and pressurising means(32) are provided in the form of a modified manually operated garden-spraying apparatus.

**16.** Apparatus according to any one of Claims 12 to 15, whereinithe filter (5) uses a filter element of the cellulose acetate type.

**17.** Apparatus according to any one of Claims 12 to 16, wherein one or more manually operable valves (35,39) are provided to allow for priming and cleaning of the apparatus.

**Patentansprüche**

**1.** Methode zum Bestimmen der Blockierungswirkung eines Zufuhrstroms auf einen Filter (5) in einem Ultrafiltrations- oder Mikrofiltrationssystem, wobei der Filter bekannte Betriebseigenschaften aufweist, das Verfahren umfassend die Schritte:

(i) Durchleiten des Zufuhrstroms durch einen Filter (5) mit bekannten Betriebseigenschaften;

(ii) Ermitteln der Änderungen des Durchflusswiderstandes des Zufuhrstroms über den Filter (5), entweder kontinuierlich oder über eine Anzahl an Zeitintervallen; und
(iii) Berechnen aus diesen Daten eines Zufuhrblockade-Index (FFI = feed fouling index), der für die Blockierungseigenschaften des Zufuhrstroms bezüglich des Filters (5) steht,

worin der FFI durch Auftragen der Widerstandsänderung über den Filter (5) als Funktion des filtrierten Volumens und Messen des Gradienten einer so aufgetragenen Kurve an einem Punkt oder einem Intervall, in dem die Kurve sich einer geraden Linie annähert, berechnet wird.

**2.** Verfahren gemäß Anspruch 1, worin die Widerstandsänderung durch Ablesen des kumulativen Volumens des durch den Filter (5) mit der Zeit hindurchtretenden Zufuhrstroms gemessen wird.

**3.** Verfahren gemäß Anspruch 1, worin Druckmessvorrichtungen auf beiden Seiten des Filters (5) angeordnet sind, um die Widerstandsänderung, ausgedrückt als Druckabfall über die Membran hinweg (TMP = trans-membrane pressure drop), zu übermitteln.

**4.** Online-Verfahren zum Überwachen und Steuern eines Filtersystems (5), das Verfahren umfassen die Schritte:

(i) Ermitteln des Widerstandes von Filterelementen, die im Filtersystem (5) verwendet werden, durch Überwachung einer Anzahl von Betriebsparametern des Systems;
(ii) Berechnen eines Zufuhrblockade-Indexes (FFI = feed fouling index), der für die blockierende Natur des Zufuhrstroms für das Filtersystem (5) steht, unter Anwendung des in (1) bestimmten Widerstandswertes; und
(iii) Steuern des Betriebs des Filtersystems in Abhängigkeit von dem berechneten Zufuhrblockade-Index (FFI), worin der FFI durch Auftragen der Widerstandsänderung über den Filter (5) als Funktion des filtrierten Volumens und Messen des Gradienten einer so aufgetragenen Kurve an einem Punkt oder einem Intervall, in dem die Kurve sich einer geraden Linie annähert, berechnet wird.

**5.** Off-line-Verfahren zum Ermitteln des möglichen blockierenden Effekts eines Zufuhrstroms unter Anwendung des Verfahrens nach einem der Ansprüche 1 bis 3, wobei das Verfahren den Schritt umfasst:

(i) Durchleiten einer Probe des Zufuhrstroms mit einem vorbestimmten Druck durch einen Filter (5) mit bekannten Betriebseigenschaften; und worin der berechnete Zufuhrblockade-Index (FFI = feed fouling index) für die blockierenden Eigenschaften der Zufuhrstromprobe auf den bekannten Filter (5) steht.

6. Verfahren gemäß Anspruch 5, zusätzlich umfassend den Schritt des In-Beziehungsetzens des FFI mit einem zweiten FFI, berechnet für einen Membranfilter zur Verwendung in einer Futrationseinheit.

7. Verfahren gemäß Anspruch 5, worin der FFI durch Auftragen der Widerstandsänderung über den Filter (5) als eine Funktion des filtrierten Volumens und Messen des Gradienten einer so aufgetragenen Kurve an einem Punkt oder einem Intervall, in dem die Kurve sich einer im Wesentlichen geraden Linie annähert, berechnet wird.

8. Verfahren gemäß Anspruch 5, worin die Widerstandsänderung des Filters (5) durch Aufzeichnen des kumulativen Volumens an Zufuhrstrom, das durch den Filter (5) hindurchgetreten ist, an einer Anzahl von vorbestimmten Zeitpunkten gemessen wird.

9. Verfahren gemäß Anspruch 5, worin die Druckmessvorrichtungen zum Messen oder Abschätzen von Widerstandsänderungen im Filter (5) mit der Zeit eingesetzt werden.

10. Verfahren gemäß Anspruch 5, worin der FFI über einen Computer in Antwort auf den Eingang der Widerstands- oder Druckdaten berechnet wird.

11. Verfahren gemäß Anspruch 10, worin der Computer die eingegebenen Daten extrapoliert, um eine akkuratere bzw. genauere Berechnung des FFI bereitzustellen.

12. Vorrichtung zur Verwendung beim Bestimmen des möglichen blockierenden Effekts eines Zufuhrstroms über das Verfahren nach einem der Ansprüche 1 bis 11, die Vorrichtung umfassend:

    einen Filter (5) mit bekannten Eigenschaften; Mittel zum Durchleiten einer Probe des Zufuhrstroms durch den Filter (5) bei vorbestimmtem Druck; Mittel zum Messen der Widerstandsänderung gegenüber dem Strom des Zufuhrstroms durch Filter (5) mit der Zeit; und Mittel zum quantitativen Berechnen eines Zufuhrblockade-Index (FFI = feed fouling index), der die blockierende Natur des Zufuhrstroms auf den Filter (5) anzeigt, basierend auf der gemessenen Widerstandsänderung gegen den Durchstrom, um so die möglichen blockierenden Wirkungen des Zufuhrstroms auf andere bekannte Filter abzuschätzen.

13. Vorrichtung gemäß Anspruch 12, worin das Mittel zum Durchleiten der Probe des Zufuhrstroms durch den Filter (5) einen Behälter (31) zum Aufnehmen der Probe und Mittel (32) zum Unter-Druck-setzen der Probe in dem Behälter (31) zur Übermittlung der Probe an den Filter (5) bei einem vorgewählten Druck umfasst.

14. Vorrichtung gemäß Anspruch 13, worin das Mittel zum Unter-Druck-setzen eine manuell betriebene Pumpe (32) darstellt.

15. Vorrichtung gemäß Anspruch 13 oder 14, worin der Behälter (31) und das Mittel zum Unter-Druck-setzen (32) in Form eines modifizierten, manuell betriebenen Rasensprengers bereitgestellt werden.

16. Vorrichtung gemäß einem der Ansprüche 12 bis 15, worin der Filter (5) ein Filterelement vom Zelluloseacetat-Typ verwendet.

17. Vorrichtung gemäß einem der Ansprüche 12 bis 16, worin eines oder mehrere manuell betreibbare Ventile (35, 39) bereitgestellt werden, um ein Anlassen und Reinigen der Vorrichtung zu gestatten.

**Revendications**

1. Procédé pour déterminer l'effet de colmatage d'un courant de charge sur un filtre (5) dans un système d'ultrafiltration ou de microfiltration, le filtre ayant des caractéristiques de fonctionnement connues, ledit procédé comprenant les étapes consistant à :

    (i) faire passer le courant de charge à travers un filtre (5) à caractéristiques de fonctionnement connues ;
    (ii) déterminer le changement de résistance à l'écoulement du courant de charge à travers le filtre (5) soit en continu soit sur un certain nombre d'intervalles de temps ; et
    (iii) à partir de ces données, calculer un indice de colmatage de charge (ICC) représentatif des caractéristiques de colmatage du courant de charge en rapport avec le filtre (5), dans lequel l'ICC est calculé en reportant le changement de résistance à travers le filtre (5) en fonction du volume filtré et en mesurant le gradient d'une courbe ainsi tracée à un instant ou dans un intervalle où la courbe devient presque une droite.

**2.** Procédé selon la revendication 1, dans lequel le changement de résistance est mesuré en faisant des relevés du volume, cumulé dans le temps, de courant de charge passant à travers le filtre (5).

**3.** Procédé selon la revendication 1, dans lequel des dispositifs de détection de pression sont disposés de part et d'autre du filtre (5) pour établir une relation entre les changements de résistance et la chute de pression transmembrane (PTM).

**4.** Procédé de contrôle et de commande directs d'un système de filtration (5), ledit procédé comprenant les étapes consistant à :

(i) déterminer la résistance d'éléments filtrants utilisés dans le système de filtration (5) en contrôlant un certain nombre de paramètres de fonctionnement du système ;
(ii) calculer, à l'aide de la valeur de résistance déterminée en (i), un indice de colmatage par la charge (ICC) représentatif de la nature encrassante du courant de charge alimentant le système de filtration (5) ; et
(iii) commander le fonctionnement du système de filtration en fonction de la valeur calculée de l'indice de colmatage de charge (ICC), l'ICC étant calculé en reportant le changement de résistance à travers le filtre (5) en fonction du volume filtré et en mesurant le gradient d'une courbe ainsi tracée à un instant ou pendant un intervalle où la courbe devient presque une droite.

**5.** Procédé de détermination indirecte de l'effet potentiel de colmatage d'un courant de charge à l'aide du procédé selon l'une quelconque des revendications 1 à 3, ledit procédé comprenant l'étape consistant à :

(i) faire passer un échantillon du courant de charge à une pression prédéterminée à travers un filtre (5) à caractéristiques de fonctionnement connues, et l'indice de colmatage par la charge (ICC) calculé étant représentatif des caractéristiques de colmatage de l'échantillon de courant de charge sur le filtre connu (5).

**6.** Procédé selon la revendication 5, comprenant en outre l'étape consistant à établir une corrélation entre l'ICC et un deuxième ICC calculé pour un filtre à membrane destiné à servir dans une unité de filtration.

**7.** Procédé selon la revendication 5, dans lequel l'ICC est calculé en reportant le changement de résistance à travers le filtre (5) en fonction du volume filtré et en mesurant le gràdient d'une courbe ainsi tracée à un instant ou dans un intervalle où la courbe devient presque une droite.

**8.** Procédé selon la revendication 5, dans lequel le changement de résistance à travers le filtres (5) est mesuré en relevant, en un certain nombre d'instants prédéterminés, le volume cumulé de courant de charge passé à travers le filtre (5).

**9.** Procédé selon la revendication 5, dans lequel des dispositifs de détection de pression servent à mesurer ou estimer des changements de résistance du filtre (5) au cours du temps.

**10.** Procédé selon la revendication 5, dans lequel l'ICC est calculé par un ordinateur en réponse à la saisie de données de résistance ou de pression.

**11.** Procédé selon la revendication 10, dans lequel l'ordinateur extrapole à partir des données saisies pour réaliser un calcul plus précis de l'ICC.

**12.** Dispositif pour déterminer l'effet potentiel de colmatage d'un courant de charge par le procédé selon l'une quelconque des revendications 1 à 11, ledit dispositif comprenant :

un filtre (5) à propriétés connues ;
un moyen pour faire passer un échantillon du courant de charge à travers ledit filtre (5) à une pression prédéterminée ;
un moyen pour mesurer le changement de résistance à l'écoulement du courant de charge à travers le filtre (5) au cours du temps ; et
un moyen pour calculer quantitativement un indice de colmatage de charge (ICC) indicatif de la nature encrassante du courant de charge sur le filtre (5) sur la base de la mesure du changement de résistance à l'écoulement afin d'estimer l'effet potentiel de colmatage du courant de charge sur d'autres filtres connus.

**13.** Dispositif selon la revendication 12, dans lequel le moyen pour faire passer l'échantillon de courant de charge à travers le filtre (5) comprend un récipient (31) destiné à contenir l'échantillon, et un moyen (32) pour mettre l'échantillon sous pression dans le récipient (31) pour fournir l'échantillon au filtre (5) à une pression préalablement sélectionnée.

**14.** Dispositif selon la revendication 13, dans lequel le moyen de mise sous pression est une pompe (32) à actionnement manuel.

**15.** Dispositif selon la revendication 13 ou 14, dans lequel le récipient (31) et le moyen de mise sous pression (32) se présentent sous la forme, modifiée, d'un pulvérisateur pour jardin à actionnement manuel.

16. Dispositif selon l'une quelconque des revendications 12 à 15, dans lequel le filtre (5) utilise un élément filtrant du type en acétate de cellulose.

17. Dispositif selon l'une quelconque des revendications 12 à 16, dans lequel une ou plusieurs vannes (35, 39) à commande manuelle sont prévues pour permettre l'amorçage et le nettoyage du dispositif.

Figure 1

Figure 2

**Figure 3**

(a) Usual  (b) Severe  (c) Mild

Flux

Time

Figure 4

Figure. 5

FIG 6

EP 0 814 887 B1

**FIGURE 7**

**FIGURE 8**